# EUROPEAN PATENT APPLICATION

(11) **EP 1 962 238 A1**
(43) Date of publication of application: **27.08.2008**
(21) Application number: 07103061.3
(22) Date of filing: 26.02.2007
(51) Int. Cl.: G06Q 20/00, G07G 1/14, G07F 7/08

(54) **A method for restricting a use of a credit or debit card**

(71) Applicant: BIGG International Inc., Wilmington DE 19808 (US)
(72) Inventor: Papismedov, Rafael, Wilmington, DE 19808 (US); Papasmadov, Moris, Wilmington, DE 19808 (US)
(74) Representative: Quintelier, Claude

(57) **Abstract**

A method for restricting a use of a credit or debit card when buying an item, comprising an allocation to said card of an identifier and associated therewith a series of restrictions relating to a buying behaviour, said series of restrictions being stored within an item restrictions database, remote from a point of sale where said item is sold, and wherein when a holder of said card offers said card for payment purpose of said item to be bought, there is checked whether at least one of said restrictions would form an obstacle for paying said item by using said card, and, if at least one of said restrictions would form such an obstacle, said payment by using said card being declined, and wherein upon each payment with said card, said series of restrictions being downloaded from said item restriction database and temporarily stored into a data processing system of said point of sale, said checking being performed by said data processing system of said point of sale.

## Description

The present invention relates to a method for restricting a use of a credit or debit card when buying an item, comprising an allocation to said card of an identifier and associated therewith a series of restrictions relating to a buying behaviour, said series of restrictions being stored within an item restriction database, remote from a point of sale, where said item is sold, and wherein when a holder of said card offers said card for payment purpose of said item to be bought, there is checked whether at least one of said item restrictions would form an obstacle for paying said item by using said card, and, if at least one of said restrictions would form such an obstacle, said payment by using said card being declined.

Such a method is known from the US application n° US 2002/0169720. In the known method, a series of use restrictions are stored in the database of the card issuer. The use of restrictions relates to time periods during which the use of the debit or credit card is not allowed or to merchants addresses where the card should also not be used. According to the method described in said application, when the user wants to pay for items with his or her credit or debit card, the database of the card issuer qualifies payment approval condition not only on monetary criteria but also on time and merchant address criteria.. A verification operation is applied at the level of the database in order to check whether for the identified card at least one of the restrictions would form an obstacle for paying the item to be bought with the card. So, if for example the restrictions concern a time period, there is checked whether the actual time falls within said time period. If so, a payment declined message is returned from the card issuer's system towards the point of sale and a payment with the credit or debit card is refused. The known method offers thus a solution to build in card issuer database some restrictions enabling the limitation on card usage with time and merchant address restrictions.

A drawback of the known method is that the whole verification is realised at the level of the credit or debit card issuer as the last stage of finalising a purchase at point of sale. Such a verification takes time, in particular when the series of restrictions is considerable. As at peak hours thousands of financial transactions have sometimes to take place in less than a few seconds, the card issuers are not eager to charge their processing system with additional processing time and features.

It is an object of the present invention to offer a method for restricting a use of a credit or debit card, which doesn't involve practically no additional charges for the card issuer.

For this purpose, a method according to the present invention is characterised in that upon each payment with said card, said series of restrictions being downloaded from said item restriction database and temporarily stored into a data processing system of said point of sale, said checking being performed by said data processing system of said point of sale. Because the series of restrictions are downloaded and the checking is performed by the data processing system of the point of sale, the processing system of the card issuer is no longer charged with the processing of the restrictions. As the checking is not done at the level of the card issuer, it is also possible to have the database completely separated and independent from the card issuer so that the present method causes no technical burden at all on the card issuer.

A first preferred embodiment of a method according to the present invention is characterised in that before entering purchase data, identifying said item to be bought, said identifier stored in said card is read, said read identifier being transmitted to a further data processing system linked to said item restrictions database, said series of restrictions associated with said read identifier being addressed into said database by said further data processing system using said identifier. By addressing the further data processing system, the one of the card issuer is not at all involved in the processing of the restrictions. Moreover, the use of the card identifier to address the series of restrictions offers an efficient way of storing and retrieving the series of restrictions.

A second preferred embodiment of a method according to the invention is characterised in that to each of said items there is associated an item identifier, in particular a barcode, said series of restrictions being formed by a sub-set of said item identifiers, each identifying an item which should not be bought, said checking being realised by verifying if the item to be bought has an item identifier present within said sub-set. By using the item identifier, an efficient checking is realised.

Preferably to said point of sale, a point of sale identifier is attributed, said series of restrictions comprising a set of point of sale identifiers, indicating those points of sale where no items can be bought by using said card. The use of a point of sale identifier enables to exclude in a single operation all the items that are bought in one or more dedicated points of sale.

A third preferred embodiment of a method according to the invention is characterised in that said series of restrictions comprises at least one time frame indicating a time period during which buying is not allowed, said checking being realised by verifying if the time at which the item is presented falls within said time period. The use of a time frame enables to neutralise the debit or credit card during certain time periods.

Preferably said series of restrictions is entered by an owner of said card or a person responsible or having authority over said card. In such a manner, a flexible control of the restrictions is possible.

A fourth preferred embodiment of a method according to the invention is characterised in that a portrait of the card holder is included into said series of restrictions, said portrait being displayed under control of said data processing system of said point of sale after storing said series of restrictions. The thus presented portrait enables the cashier to make a visual comparison between the card holder and the portrait thereby providing an additional control tool.

Preferably a promotional message is generated by said further data processing system upon retrieving said series of restrictions, said promotional message being added to series and displayed under control of said data processing system of said point of sale. In such a manner personal promotions can be presented to the card holder.

The invention also relates to a point of sales data processing system for executing the method according to the invention.

The invention will now be described in more details with reference to the drawings illustrating a preferred embodiment of the method according to the invention. In the drawings:
figure 1 illustrates the concept of the present invention;
figure 2 illustrates, by means of a flow chart the processing steps performed at the point of sale;
figure 3 illustrates, by means of a flow chart the processing steps performed at the place where the database is; and
figure 4 illustrates the interaction between the card holder responsible and the database.

In the drawings a same reference sign has been allocated to a same or analogous element.

Payments with credit, debit, prepaid, fidelity or gift cards are becoming more and more common and payment cards are mor e frequently used and replace more and more cash note transactions. A drawback of those known cards is however that the card holder can spend, as if to say, in an uncontrolled manner money. Only if a monetary limit has been reached, a payment request will be declined. This problem is even more serious for parents who want to give a credit or debit card to their children. Providing credit, debit cards or any other payment card to children has the advantage that the children must not have cash money in their pockets, which could easily be stolen or lost. Such cards also avoid that the children ask frequently for cash money. Moreover, by giving a child a credit or debit card, care is taken that the child has, in case of emergency or necessity sufficient financial means to cope with the situation and will not take some foolish actions for lack of it. The drawback of giving the child a credit or debit card is however that controlling his buying behaviour becomes more difficult. With the card, the child could for example buy alcohol, video games or other items which do not meet the approval of the parents. Also, and the same applies for cash money, once the child has the financial means he could use it for buying things like fast food, sweets or even weapons.

The aim of the invention is to provide a technical tool which gives to the parents a means to prevent that their child, holding a credit, debit or other payment card, buys items which the parents do not approve. The present invention is however not limited to a use for children and can also be applied to adults. Adults could use the method of the present invention in case that they have some problems to control their buying behaviour. Corporations could use the method for their employees.

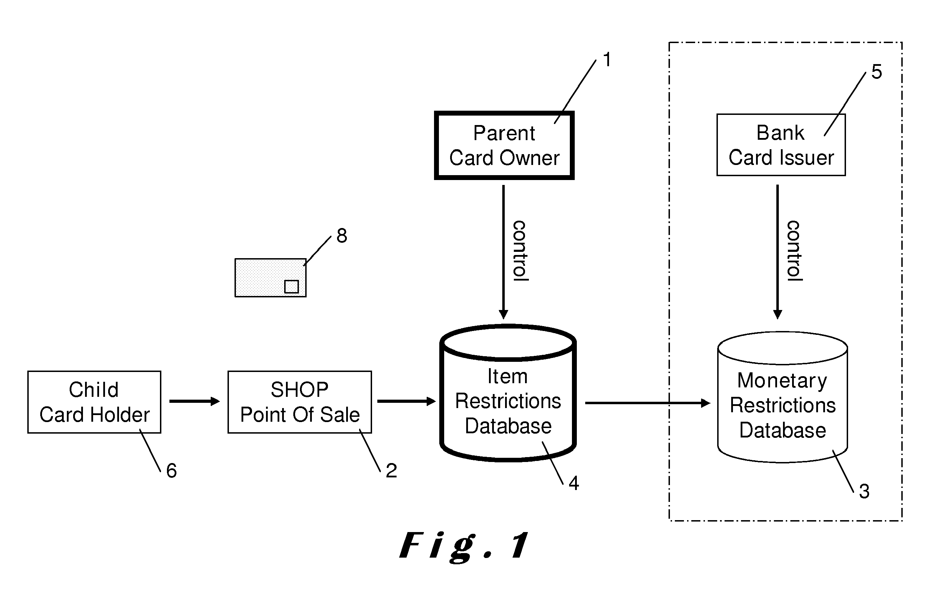

As illustrated in figure 1, the present invention aims to provide a tool to a person 1, who can be a parent, a supervisor as a card owner having authority over the card holder 6, to intervene into a buying operation, performed by the card holder,at a point of sale 2, without being physically present. For this purpose, the parent, supervisor or more generally the entitled person 1 provides a series of restrictions to an item restriction database 4, which is not part of the card issuer's 5 data processing system and/or monetary restrictions database 3 and operated independently from the latter. The series of restrictions is stored into the database 4. The series of item restrictions can be updated as desired by the card owner at any time he or she wants. Such an update is for example necessary when more or less items should be on the list. The item restriction database is for example implemented on an infrastructure provided by a service provider who is preferably not the card issuer, nor the point of sale. It should be noted that the item restriction series could also be a series of allowed items instead of forbidden items. However for the sake of clarity only the embodiment with a series of forbidden items will be described hereinafter.

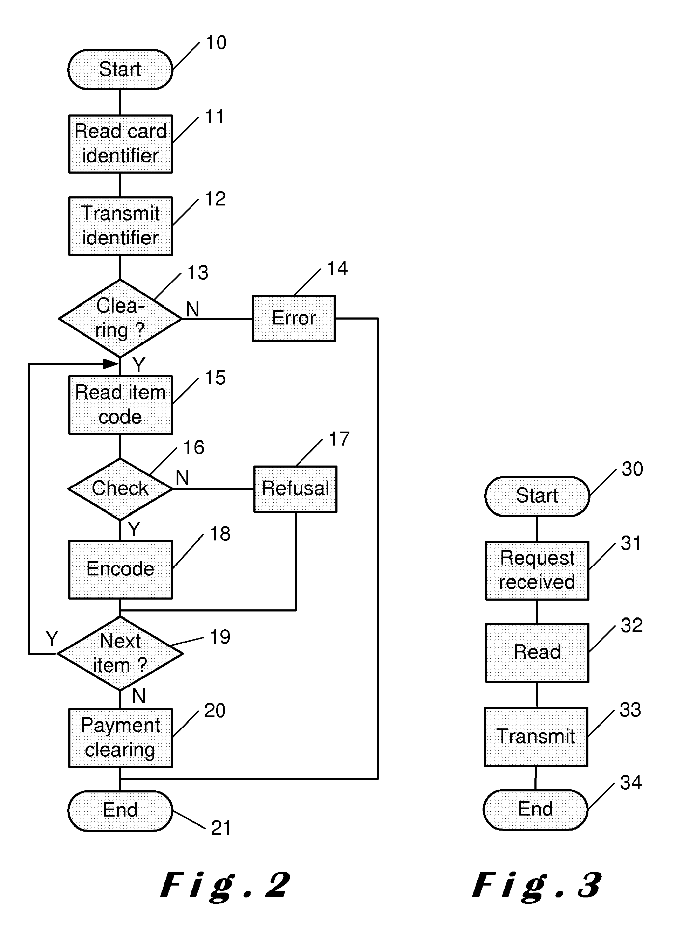

If now the card holder 6 presents (10, fig. 2) himself to a point of sale 2, he or she will first have to present his or her card 8 to a reading device present at the point of sale 2. The reading device, which is part of the point of sale's data processing device, will read (11) an identifier stored into the card 8 and identifying the card owner. This identifier can be the same card number or account number of the card, which is read for the financial payment clearing transaction where the card is used. Alternatively, the identifier could be a particular one designated by the database service provider, or the one of the point of sale membership card. The read identifier is transmitted (12) to the card issuer 6 for the usual financial transaction, either immediately, if the point of sale has a terminal provided therefore, or only after all items to be bought have been scanned. The identifier is also sent to the further data processing system 4. After this transmission of the identifier to the card issuer, the point of sale's data processing device will wait (13) for a payment clearing acknowledgement or refusal through the issuer monetary restrictions. The data processing system will also wait for a return of data from the further data processing system 3. Preferably the waiting time is limited, staying within current defined time window of a standard credit card transaction clearing. If no answer is received from the database (13; N) a retry message will be sent again. If a number of retries has been reached, an error message will be generated 14 and the payment with the presented card will not be allowed.

Referring now to figure 3, once the further data processing device co-operating with the database 4 has received (30) the identifier, it will start a reading of the series of restrictions associated with this identifier and stored in the database. For this purpose, the identifier for example forms an address (31), to address the location in the database where the associated series of restrictions is stored. Alternatively, the identifier could be used as an input data to generate a query to find such an address. Once the address is formed, the location in the database is addressed and the series of restrictions stored at this address in the database is read (32). Thereafter, the series of restrictions is introduced into a message which is transmitted (33) to the data processing system of the point of sale, having sent the card identifier. The data exchange between the data processing device of the point of sale and the further data processing device of the restrictions database is for example realised by using The Internet or another communication medium. After transmission of the series of restrictions, the routine at the level of the further data processing device is finished (34) and the latter will wait for a new request. Preferably, the series of restrictions is transmitted to the data processing device of the point of sale in combination with the received card identifier, so that the data processing device at the point of sale can easily recognise to which credit or debit card the received series of restrictions is associated.

Referring back to the flow chart, illustrated in figure 2, once the point of sale's data processing device has received (13; Y) the series of restrictions or messages transmitted by the item restrictions database, the bar code scanning of the items to be bought is started (15). For each scanned item that is presented to the cashier, there is checked (16) whether the concerned item is present in the series of restrictions and so if one or more restrictions would form an obstacle for paying the concerned item with the initially presented credit or debit card. When the item is not present in the series of restrictions (16, A), the item is registered for the payment ticket. If on the other hand the item is present in the series of restrictions or more general if the restrictions form an obstacle (16; N) for paying with the initially presented credit or debit card, the encoding of the item will be refused and also a payment with the card will be refused. Preferably a message, which can be written or audible, will be displayed to the cashier stating the item rejection and a statement that this payment will not be forwarded to card issuer for clearing, if this item is not taken away.

The verification whether or not the item presented to the cashier is to be considered as an obstacle for payment with the credit or debit card, is preferably based on an item identifier. The use of item identifiers, such as for example barcodes, is well known. Shops sell a plurality of items and with each item such an item identifier is associated. The item identifier is generally scanned by the cashier and the scanned item identifier is used by the point of sale's data processing device to identify the item and associate with this item the price thereof. So, since the item identifier is most usually read by the data processing device, this item identifier is preferably used for checking with the series of restrictions. The latter is then formed by a sub-set of item identifiers each identifying an item which should not be bought. So, for checking whether or not the concerned item is admissible, the scanned item's identifier is compared with those of the sub-set of item identifiers. If the scanned item identifier is present in said sub-set, the encoding thereof is refused. In addition to manufacturer labelled bar codes an additional or a different item identifier can be used as an ISBN number for books or a single reseller internal item identification number as "Amazon.com Inc"s ASIN - Amazon Standard Identification Number. For purchase items that might not have a unique identifier as a "home delivery service" for example, a textual search might be performed on the item name with the aid of a linguistic thesaurus.

The verification could also be based on a set of rules which have been established and which take into account data build up on historical buying behaviour of the card holder. So for example if the card holder had paid for a full gasoline tank, the system would not allow to pay again for a full tank within for example the next two hours. So money and time criteria could be combined in a rule and used for allowing or not to buy something with the credit card.

It could also be envisaged that all the items sold in a particular shop are within the series of restrictions. This is for example the case when the card is owned by a child and in the shop there is mainly tobacco and alcohol for sale. If this is the case, the series of restrictions will comprise a point of sale's identifier, attributed to that particular point of sale. When an item is then scanned in such a point of sale, the series of restrictions will comprise the point of sale's identifier of the concerned shop and all payments with the card will be blocked. Products manufactures can apply for a nationally unique manufacturer ID identification number, which can be added as a prefix to the bar-codes with which they label their products with. This manufacturer ID can be also used as a criteria within the verification process.

The series of restrictions could also comprise at least one time frame indicating a time period during which buying is not allowed. The checking is then realised by verifying if the time at which the item is presented falls within the time period indicated in the series of restrictions. So, for example, if the time frame indicates 18 → 07, each purchase with the debit or credit card after 6 pm or before 7 am will be blocked

It could also be envisaged that a maximum monetary amount per day is comprised within the series of restrictions. The checking could also be realised on simple product categories as "alcoholic drinks" for example, compiled by the item restrictions database processing device from a long list of item bar-codes that fall in this category. The checking could also be realised on more complex product categories, as "emergency services" for example, compiled from a list of emergency related service providers starting from specific health care services to a taxi trip in the middle of the night or to a punctured wheel replacement. The checking could also be realised on smarter product categories, as "on vacation" for example, compiled from hotel services to restaurants and other leisure activities, in a more lenient manner where the restriction logic is based not only on an item list but also on a complex mix of logical rules not restricted to just lists of items. The checking could also be realised with card owners fine tuning the restrictions by specifically adding or removing single items to the precompiled lists prepared by the database processing system.

If the purchase of the item with the credit or debit card is blocked (16, N), a message is generated (17) indicating that the item is among the series of restrictions and therefore purchase by using this card is not possible. If on the other hand, the purchase is allowed, the processing (18) of encoding the item is performed in the usual manner by including the item into the list of items to be bought. The process is thereafter started again as from step 15 if not all items have been encoded (19). If all items have however been encoded, the final bill is made up and the payment details are forwarded to issuer for regular payment clearing (20).

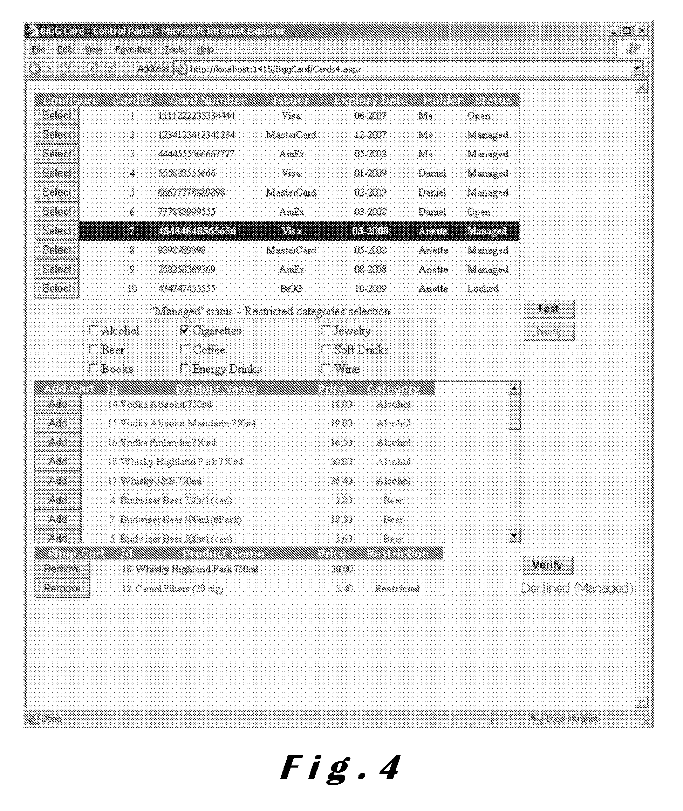

Figure 4 gives an example how the series of restrictions can be established. The card owner or the person having responsibility over the card owner will preferably go to the website of the item restrictions database service provider or use a local client software application on his personal computer like instant messenger or a mobile phone handheld device. Of course other alternatives, such as for example communication by post or telephone or facsimile are also possible but for the sake of clarity they will not be described in detail and only the website embodiment will be described in detail.

On the website of the database service provider, the responsible person will configure the concerned card by selecting restrictions from a list where several items or groups of items are mentioned. Optionally, a picture from the current card holder can be stored in combination with the series of item restrictions. In the latter case the picture is downloaded to the Point of Sale together with the series of restrictions. In such a manner the cashier can verify if the card holder corresponds to the person displayed on the picture.

After having accessed the database, the person will then receive a list of item categories such as "alcohol", "cigarettes", "jewellery" etc.. If the restrictions apply to one or more of such categories, the person will simply have to mark the concerned category and one or more categories or individual items. An indication will appear showing that the indicated item category has been selected and registered. The restrictions could apply to the whole category or only to some items of it. So, once a category has been selected, a list of items within the selected category might be presented. So, for example when the category "alcohol" was selected, the user could still choose that for example beer is allowed, but heavier alcohols are not. In the latter case, the person will have to enter this information which will be confirmed by the word "restricted". Once all desired restrictions are recorded, the series is stored in the database and it will be accessible to points of sale requests around the world at all times. These restrictions can be updated by the responsible person every time he or she wants.

The present invention thus offers a technical tool for example to parents, if they decide that their child should not eat fatty fast food, they will select this in the series of restrictions. They can nevertheless still authorise their child to buy at the same store healthy food like a salad or fruit. So, when the child presents his credit or debit card to the fast food restaurant, buying a hamburger will be impossible, but a salad could still be bought. So, the child can still eat with its friends at the fast food restaurant and the social contacts will not be endangered, but care will be taken that the parents are paying for the child to get only healthy food despite the fact that the parents are not physically present. In addition to barriers for payment, the item restrictions database will provide reports of purchase history and enable real time notifications to card owner of card holder's usage attempts, approved and/or declined.

It could also be envisaged that together with the downloading of the item restriction series a promotional message is generated. The latter message is preferably personally configured for the card holder. As the device is capable of storing data relating to the card holder purchasing behaviour, the promotional message could take this behaviour into account for generating a tailor made promotional message. The promotional message of course will concern items sold in the point of sales where the card holder presented his or her card. The promotional message could also take into account for example hobbies of the card holder. In the latter case the database has to store those hobbies.

The method according to the present invention can further be improved by performing a check on geographical coordinates. To this purpose the card holder sends with mobile phone a location message to his mobile phone operator. This message is for example formed by an SMS. The mobile phone operator answers the location message by sending location coordinates to the data processing system indicating geographical coordinates where the cardholder is. This is easily realised since the operator can easily identify the location. The geographical coordinates are then compared by further geographical coordinates indicating where the point of sale is located. An error message is generated if said geographical coordinates and said further geographical coordinates do not match. Under control of the error message all transactions could be blocked.

## Claims

1. A method for restricting a use of a credit or debit card when buying an item, comprising an allocation to said card of an identifier and associated therewith a series of restrictions relating to a buying behaviour, said series of restrictions being stored within an item restrictions database, remote from a point of sale where said item is sold, and wherein when a holder of said card offers said card for payment purpose of said item to be bought, there is checked whether at least one of said restrictions would form an obstacle for paying said item by using said card, and, if at least one of said restrictions would form such an obstacle, said payment by using said card being declined, **characterised in that** upon each payment with said card, said series of restrictions being downloaded from said item restriction database and temporarily stored into a data processing system of said point of sale, said checking being performed by said data processing system of said point of sale.

2. The method as claimed in claim 1, **characterised in that** before entering data identifying said item to be bought, said identifier stored in said card is read, said read identifier being transmitted to a further data processing system linked to said item restrictions database, said series of restrictions associated with said read identifier being addressed into said database by said further data processing system using said identifier.

3. The method as claimed in claim 1 or 2, **characterised in that** to each of said items there is associated an item identifier, in particular a barcode, said series of restrictions being formed by a sub-set of said item identifiers each identifying an item which should not be bought, said checking being realised by verifying if the item to be bought has an item identifier present within said sub-set.

4. The method as claimed in claim 1 or 2, **characterised in that** to said point of sale a point of sale identifier is attributed, said series of restrictions comprising a set of point of sale identifiers indicating those points of sale where no items can be bought by using said card..

5. The method as claimed in anyone of the claims 1 to 4, **characterised in that** said series of restrictions comprises at least one time frame indicating a time period during which buying is not allowed, said checking being realised by verifying if the time at which the item is presented falls within said time period.

6. The method as claimed in any one of the claims 1 to 5, **characterised in that** said series of restrictions is encoded by said card holder or a person responsible or having authority over said card holder.

7. The method according to claim 6, **characterised in that** said restrictions encoding is realised by using an informative menu made available by said further data processing system.

8. The method as claimed in anyone of the claims 1 to 7, **characterised in that** a portrait of the card holder is included into said series of restrictions, said portrait being displayed under control of said data processing system of said point of sale after storing said series of restrictions.

9. The method as claimed in claim 2, **characterised in that** a promotional message is generated by said further data processing system upon retrieving said series of restrictions, said promotional message being added to series and displayed under control of said data processing system of said point of sale.

10. The method as claimed in anyone of the claims 1 to 8, **characterised in that** said series of restrictions is modifiable.

11. The method as claimed in claim 10, **characterised in that** said modification is realised by establishing a communication with said item restriction database by using a mobile phone.

12. The method as claimed in anyone of the claims 1 to 11, **characterised in that** the card holder sends with mobile phone a location message to his mobile phone operator, said location message being answered by sending location coordinates to the data processing system indicating geographical coordinates where the cardholder is, said geographical coordinates being compared by further geographical coordinates indicating where the point of sale is locating, and wherein an error message is generated if said geographical coordinates and said further geographical coordinates do not match.

13. A point of sale data processing system for executing the method according to any one of the claims 1 to 12, **characterised in that** it comprises communication means provided for establishing a communication with said item restrictions database, said communication means being connected to a memory provided for storing said series of restriction downloaded from said item restrictions database, said data processing system comprising checking means connected to said memory and provided for checking whether said purchase item falls within said series of restrictions.

14. A further processing system provided for communicating with said point of sale data processing system as claimed in claim 13, **characterised in that** said further processing system is connected to said database and provided for reading said series of restrictions.
